Europäisches Patentamt

European Patent Office

Office européen des brevets

(19)

(11)   EP 1 482 671 A1

(12)   **EUROPEAN PATENT APPLICATION**

(43) Date of publication:
   **01.12.2004 Bulletin 2004/49**

(51) Int Cl.[7]: **H04L 1/18**, H04L 1/16

(21) Application number: **03291278.4**

(22) Date of filing: **28.05.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Motorola Inc.**<br>   **Schaumburg, IL 60196 (US)**<br><br>(72) Inventors:<br>• **Vivier, Guillaume**<br>   **75013 Paris (FR)** | • **Martinez, Georges**<br>   **75012 Paris (FR)**<br>• **Sesia, Stefania**<br>   **92614 Antony (FR)**<br><br>(74) Representative:<br>   **Cross, Rupert Edward Blount et al**<br>   **BOULT WADE TENNANT,**<br>   **Verulam Gardens**<br>   **70 Gray's Inn Road**<br>   **London WC1X 8BT (GB)** |

(54)   **Retransmission request method and apparatus in a broadcast communication system**

(57)   A first transmitter (110) broadcasts on a broadcast channel a message (210, 310) in the form of $m_i$ sub-blocks. The method is characterised by using a bi-directional link (122, 132, 142), distinct from the broadcast channel (111), for acknowledgements, retransmissions and supplementary data.

Moreover, characteristics of the broadcast channel transmission are then adjusted, depending upon the proportion of positive acknowledgements (230) and/or negative acknowledgements (240) that the broadcast transmitter receives over those bi-directional links (122, 132, 142) to which it is connected.

FIG. 2

**Description**

Technical Field

The invention relates to the operation of a repeat retransmission request mechanism in a broadcast communication system.

Background

It is anticipated that in future communications systems, users will wish to receive large amounts of data common to more than one user, for example in the wireless broadcast of a live sports event by Digital Video Broadcast (DVB) to a plurality of mobile communications devices. This is known as point-to-multipoint broadcasting.

Wireless communications systems generally experience error rates much higher than those of a wireline system. Moreover, the broadcast channel conditions experienced by each user in a point-to-multipoint broadcast will differ due to effects such as shadowing, fading or mobility. This combination results in a wide variation in error rates experienced by users.

To cope with errors, wireless communications systems employ error protection techniques such as Forward Error Correction (FEC).

FEC adds redundancy to the data payload to protect it. However, due to the wide variation in error rates observed in a wireless broadcast, the level of redundancy used is made large enough to protect against highly adverse channel conditions, despite these only occurring rarely or to a minority of those receiving the broadcast.

Thus the FEC scheme is overall wasteful of bandwidth, with most receivers getting a sub-optimal transmission rate for their individual channel conditions. A sub-optimal transmission rate compromises the quality of the image or sound or more generally any data being broadcast.

Whilst this problem exists for point-to-multipoint broadcast systems, by contrast systems employing a single communication channel between a transmitter and a single receiver, such as cellular systems (also known as point-to-point systems) have a means of providing feedback as to the individual receiver's success in decoding transmitted data.

This feedback enables modification of the FEC redundancy used on that individual channel. The result is an improvement in transmission rates for most of the channel conditions encountered, so reducing its wastefulness.

The presence of feedback in point-to-point systems also allows for the receiver to request a retransmission of any data received with errors. Automatic Retransmission ReQuests (ARQs) enable a receiver to ensure correct decoding by requesting repeated transmissions.

ARQ thus provides a means of maintaining overall error rates when used in conjunction with a reduction in FEC redundancy. A net benefit in overall transmission rate is then achieved if the reduction in FEC redundancy bandwidth outweighs the increase in ARQ retransmission bandwidth.

It will be appreciated therefore that some form of feedback within a broadcast transmission system would be desirable if it could similarly be used to obtain a net benefit in overall broadcast transmission rates.

R.H.Deng, 'Hybrid ARQ schemes for point to multipoint communication over nonstationary broadcast channels', IEEE Trans. Comm. Vol 41, No. 9, Sept. 1993, describes providing a separate feedback channel from each receiver to the broadcast transmitter, to enable the repeat broadcast of lost data over the broadcast channel to be requested. However, multiple data retransmissions will have a severe impact on the overall data transmission rate when individual receivers request different lost data. Moreover, these retransmissions may drastically increase the overall communication delay.

Similarly, EP 0 411 538 A2 (NEC) proposes using a wire-line telephone to request retransmissions from a satellite broadcast system.

European patent application 00403681.0 'Method And Unit For Composite Communications System', filed 27/12/2000, proposes a means of reducing the impact of ARQ on point-to-multipoint broadcasts by allowing receivers to share data with each other over an ad-hoc peer-to-peer network, on the assumption that generally not all receivers will lose the same data. This reduces how often data would need to be rebroadcast to all receivers, so reducing the ARQ bandwidth and increasing the net benefit in broadcast transmission data rates.

WO 02/087140 A1 (Motorola) extends the functionality of the separate feedback channels seen in Deng above. The document proposes that these channels are bi-directional. The bi-directionality enables both retransmission requests from individual receivers, and the retransmission of the data to individual receivers over this parallel link, so avoiding the need for retransmissions to be sent on the broadcast channel at all. This removes ARQ bandwidth from the broadcast channel altogether.

However, this does not account for the cost of using the second bi-directional channel, which bit-for-bit is typically much higher than the broadcast channel, as in general it has a lower bandwidth. In use, it would be desirable to limit its use by finding a cost/performance balance between the broadcast transmission rate and the totality of communications over the parallel bi-directional links with all receivers of the broadcast.

Hence there is a need to manage the operation of data retransmission over a parallel bi-directional link in wireless broadcast systems.

The present invention addresses the above problem of managing the operation of point-to-multipoint communications.

Summary of the Invention

In summary, the present invention provides a method of operating a re-transmission request mechanism in a broadcast communications system comprising a broadcast transmitter and at least a first receiver additionally connected to the broadcast transmitter via a bi-directional link.

In a first aspect, the present invention provides a method of operating a re-transmission request mechanism, as claimed in claim 1.

In a second aspect, the present invention provides apparatus to operate a re-transmission request mechanism, as claimed in claim 13.

Further features of the present invention are as claimed in the dependent claims.

Embodiments of the present invention will now be described by way of example with reference to the accompanying drawing(s), in which:

Brief description of the drawings

FIG. 1 is a schematic illustration of a broadcast communications system in accordance with an embodiment of the present invention.

FIG. 2 is a block diagram of a Type-II hybrid automatic retransmission request mechanism in accordance with an embodiment of the present invention.

FIG. 3 is a block diagram of a Type-III hybrid automatic retransmission request mechanism in accordance with an embodiment of the present invention.

Detailed description

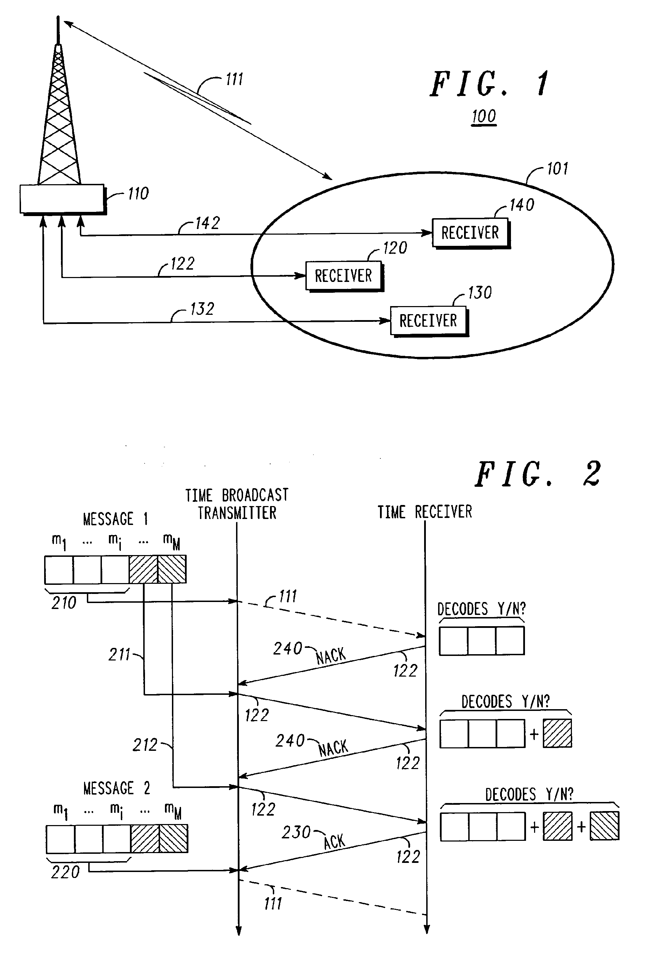

Referring to Figure 1, in an embodiment of the present invention a broadcast communications system 100 comprises a broadcast transmitter 110 and at least a first receiver 120, the broadcast transmitter operable to transmit over broadcast channel 111, and at least the first receiver operable to receive said transmissions.

In addition, a bi-directional link 122 is available in parallel with the broadcast channel 111 to connect at least the first receiver 120 and broadcast transmitter 110, provided for example by Universal Mobile Telephone Standard (UMTS), General Packet Radio System (GPRS) or Global System for Mobile (GSM) communication.

As the link 122 is bi-directional, the broadcast transmitter 110 and at least the first receiver 120 are additionally operable as transceivers over link 122.

The aim of the present invention is to manage the level of redundancy or parity in the broadcast channel, and the totality of communications over the parallel bi-directional links, such that a performance versus cost criterion is substantially met. The balance of broadcast data rate, reliability (errors, delays and other quality of service factors) and costs may be termed the system reliability policy.

As the bi-directional link is typically bit-for-bit substantially more expensive that the broadcast channel, an immediate advantage is gained from using a more efficient retransmission request scheme:

In an embodiment of the present invention, a Hybrid-ARQ (HARQ) scheme is used over the bi-directional link. HARQ aims to minimise the impact of ARQ retransmissions in point-to-point systems. ARQ systems retransmit the same data until it is successfully received, or until a chosen maximum number of retransmissions is reached. Because the same transmission is resent, the FEC redundancy level used must still be a compromise between ideal and adverse channel conditions, as retransmission requests are unlikely to occur in ideal conditions.

HARQ combines ARQ with modifications to the FEC redundancy. Rather than using a relatively high FEC redundancy as a compromise for all conditions, HARQ allows a lower redundancy for initial transmission, assuming by default that conditions are good. However upon a retransmission request, it then uses a higher level of redundancy.

The effect is to separate the requirements of low redundancy for initial transmission in ideal conditions and higher redundancy for retransmission in adverse conditions.

Type III HARQ retransmissions comprise a retransmission of the data together with additional redundancy bits, whilst Type II HARQ retransmissions comprise a retransmission only of the additional redundancy bits, to effectively strengthen the FEC of the corrupted data already received. This is known as an Incremental Redundancy-HARQ (IR-HARQ)

IR-HARQ uses less retransmission bandwidth, but relies on the additional transmitted redundancy being sufficient to correct the particular errors of the original transmission. By contrast, Type-III HARQ uses more bandwidth to send a more robust version of the original data, and so additional transmissions are self-decodable.

In operation

In operation, in an embodiment of the present invention all or part of at least a first data payload is encoded with redundancy / parity bits within one or more sub-blocks, totalling M possible sub-blocks where $1 \leq M$. Optionally, only $m_i$ of the M possible blocks may initially be generated, where $1 \leq m_i \leq M$.

Referring to Figures 1 and 2, the transmitter 110 broadcasts on broadcast channel 111 a message comprising $m_i$ sub-blocks 210, where $1 \leq m_i \leq M$.

At least the first receiver 120 attempts to decode the $m_i$ sub-blocks of the message broadcasted 210. If the receiver 120 is successful at decoding, it sends a positive acknowledgement (ACK) 230 back over its bi-directional link 122 and awaits the next broadcast message 220. However if the receiver 120 is unsuccessful at decoding, it sends a negative acknowledgement (NACK) 240 back over the bi-directional link 122.

It should be noted that different acknowledgement schemes exist, such as positive-only, negative-only and positive and negative. It is envisaged that the present invention may utilise any acknowledgement mechanism from which successful and unsuccessful decoding can be inferred.

In a preferred embodiment of the present invention, the broadcast transmitter 110 employs an IR-HARQ scheme or equivalent over the bi-directional link 122. In this scheme, any receiver that has sent a NACK is sent sub-block $m_{i+1}$ 211 over the bi-directional link 122, where $m_{i+1}$ is one of the possible M sub-blocks that was not broadcast in the original message. If any receivers still cannot decode the data and send another NACK, the process is repeated using $m_{i+2}$ (a second unbroadcast sub-block), then $m_{i+3}$ (a third), and incrementing until the final unbroadcast sub-block $m_M$ 212 is sent. After $m_M$ 212 is sent, if the receiver still does not successfully decode the message, it cannot be recovered by the scheme.

It is envisaged that this process may occur in parallel with the receipt of subsequent broadcast messages.

In the preferred embodiment of the present invention, the broadcast transmitter employs an IR-HARQ scheme using Low Density Parity Check (LDPC) codes, although it shall be clear to a person skilled in the art that other redundancy codes are possible.

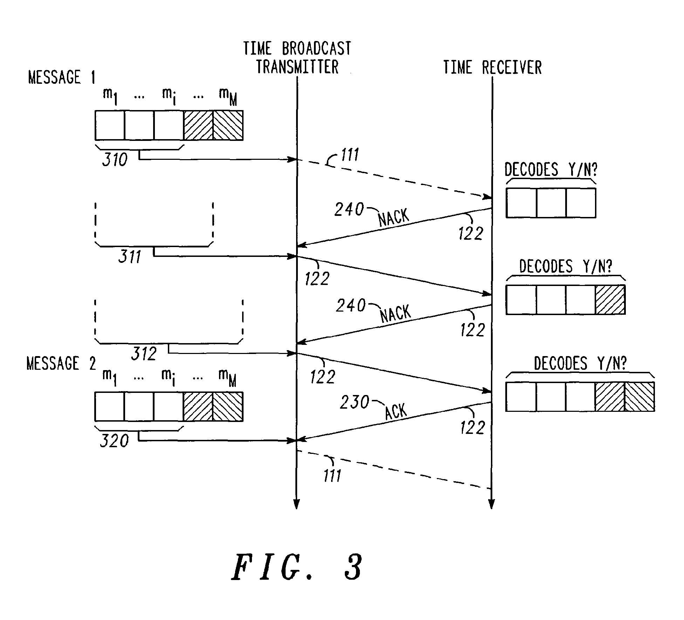

In an alternative embodiment of the present invention, the broadcast transmitter employs a Type-III HARQ scheme or equivalent over the bi-directional link. Referring to Figures 1 and 3, in this scheme any receiver that has sent a NACK is sent a message comprising $m_{i+1}$ sub-blocks 311 over the bi-directional link, where $m_{i+1}$ comprises the original $m_i$ sub-blocks of the message plus one of the possible M sub-blocks that was not broadcast in the message. If any receivers still cannot decode the data and send another NACK, the process is repeated using $m_{i+2}$ sub-blocks, then $m_{i+3}$ sub-blocks, incrementing until all M sub-blocks 312 are being sent. Again it is envisaged that this process may occur in parallel with the receipt of subsequent broadcast messages.

In an enhanced embodiment, at each increment there is the still the option to retransmit the message with the current number of sub-blocks.

Management of system reliability policy

For all embodiments, the broadcast FEC redundancy or parity level defined by $m_i$ is adapted for next message k as a function of the positive and negative acknowledgements for broadcast messages previously received by the broadcast transmitter:

$$m_i (k) = f(\{m_i (k\text{-}j), ..., m_i(k)\}, \{ACK(k\text{-}j), ..., ACK(k)\}, \{NACK(k\text{-}j), ...NACK(k)\})$$

Where $j$ can take values in the range $1 \leq j \leq k\text{-}1$.

This function enables the system reliability policy to be defined according to properties of the broadcast channel and bi-directional links, in particular the cost, both economic and to quality of service.

A candidate function is:

$$f = \begin{cases} \text{if } NACK(k-1) > 30\% & m_i(k) = m_i(k-1) + 2 \\ \text{if } NACK(k-1) > 10\% & m_i(k) = m_i(k-1) + 1 \\ \text{if } NACK(k-1) + NACK(k-2) + NACK(k-3) < 5\% & m_i(k) = m_i(k-1) - 1 \\ \text{otherwise} & m_i(k) = m_i(k-1), \end{cases}$$

$$m_i(k) \leq M.$$

In this function, if the proportion of NACKS sent by all connected receivers exceeds a certain threshold percentage, the broadcast transmission redundancy rate (number of transmitted sub-blocks $m_i$) increases, in this example with the level of increase being piecewise related to the proportion of NACKs. Optionally up to M-1 such thresholds and increments may be incorporated within the function.

Similarly if the proportion of NACKS sent by all connected receivers is below a threshold percentage, the broadcast transmission redundancy rate decreases. In this example, a history compiled from three prior message broadcasts is used to provide confidence that the broadcast channel conditions are generally good. Again, up to M-1 such thresholds and decrements may be incorporated within the function.

The threshold percentages are each defined as a function of a set of factors comprising any of the following:

    i. Cost of bi-directional link transmission per unit;
    ii. Cost of broadcast transmission per unit;
    iii. Current or historical values of $m_i$;
    iv. Current or historical proportion of ACKs; and
    v. Current or historical proportion of NACKs.

In an enhanced embodiment of the present invention, a certain threshold percentage is provided that identifies that proportion of NACKS for which individual retransmission over bi-directional links is more costly than retransmission over the broadcast channel. At or above this threshold, the retransmission is sent over the broadcast channel.

It is envisaged within the scope of the invention that the broadcast channel and bi-directional link may incorporate those additional elements normal to mobile communication means, such as proxy servers and base stations.

The present invention provides a method of managing the balance between total cost and reliability for retransmission request systems that employ a separate bi-directional channel for retransmissions.

By considering the total cost, different profiles of user experience can be easily controlled. For example, with a generally fair broadcast channel, a small percentage of NACKs will come from all receivers. With a generally good broadcast channel but one sub-region with poor reception, a large percentage of NACKs will come from a small group of receivers. However the overall proportion of NACKs may well be similar for both. By equating different reception conditions in this manner a simple system reliability policy can be implemented.

**Claims**

1. A method of operating a repeat retransmission request mechanism in a broadcast communication system that comprises;

    at least a first broadcast transmitter (110) for broadcasting a message (210, 310) comprising data and redundancy or parity bits, and at least a first receiver (120) to receive said broadcast message,
        the method comprising;
    the first transmitter (110) broadcasting on a broadcast channel (111) the message in the form of $m_i$ sub-blocks (210, 310), where $1 \leq m_i$;
    using a bi-directional link (122), available between the first receiver (120) and the first transmitter (110) and distinct from the broadcast channel (111), to carry positive acknowledgements (ACKs) (230) and/or negative acknowledgements (NACKs) (240) from the first receiver (120) to the first transmitter (110) of successful or unsuccessful decoding of the $m_i$ sub-blocks of broadcast messages,
        **characterised by**;
    using the bi-directional link (122) to carry from the first transmitter (110) to the first receiver (120) a sub-block or sub-blocks (211, 212, 311, 312) that repeat and/or supplement those $m_i$ sub-blocks that the first receiver (120) was unable to decode from the broadcast message (210, 310); and

adjusting characteristics of the broadcast channel transmission dependant upon the proportion of ACKs and/or NACKS that the broadcast transmitter (110) receives over those bi-directional links (122, 132, 142) to which it is connected.

2. A method according to claim 1 wherein the retransmission request mechanism is a hybrid automatic retransmission request (HARQ) mechanism.

3. A method according to claim 2 wherein the HARQ mechanism is a Type-II HARQ mechanism, wherein all or part of at least a first data payload is encoded by an incremental redundancy scheme to comprise one or more sub-blocks, totalling a possible M sub-blocks where $M \geq m_i$.

4. A method according to claim 3 wherein the Type-II HARQ mechanism employs Low Density Parity Check codes.

5. A method according to any one of the preceding claims wherein supplementary sub-blocks are taken from a subset of the M possible sub-blocks that were not of the $m_i$ sub-blocks broadcast in the original message, the M possible sub-blocks being those that could be generated from a desired maximum level of redundancy.

6. A method according to any one of the preceding claims, wherein the characteristic of the broadcast channel transmission to be adjusted is the level of redundancy used for the broadcast channel transmission.

7. A method according to claim 6, wherein the characteristic to be adjusted is the value of $m_i$, so as to adjust the initial number of sub-blocks and hence redundancy or parity bits to be broadcast within a message.

8. A method according to claim 7, wherein for message k,

$$m_i(k) = f(\{m_i(k\text{-}j), ...,m_i(k)\}, \{ACK(k\text{-}j), ..., ACK(k)\}, \{NACK(k\text{-}j), ...NACK(k)\}).$$

Where $j$ can take values in the range $1 \leq j \leq k\text{-}1$.

9. A method according to claim 8, wherein for message k, function f comprises up to M-1 of any or all of the following;

   i. $m_i(k)$ is increased by $X_1$ if the proportion of NACK(k-j)>$T_{1j}$%, or ACK(k-j)<(100-$T_{1j}$)%, for all j where j can take a value from $1 \leq j \leq k\text{-}1$; and
   ii. $m_i(k)$ is decreased by $X_2$ if the proportion of NACK(k-j)<$T_{2j}$%, or ACK(k-j)>(100-$T_{2j}$)%, for all j where j can take a value from $1 \leq j \leq k\text{-}1$,

   wherein threshold percentages $T_{1j}$, $T_{2j}$ for all j where $1 \leq j \leq k\text{-}1$, and values $X_1$, $X_2$ are each defined for each of up to M-1 instances.

10. A method according to claim 9 wherein threshold percentages $T_{1j}$, $T_{2j}$ for all j where $1 \leq j \leq k\text{-}1$, and values $X_1$, $X_2$ are each defined for each of up to M-1 instances as a function of a set of factors comprising any of the following:

   i. Cost of bi-directional link transmission per unit;
   ii. Cost of broadcast transmission per unit;
   iii. Current or historical values of $m_i$;
   iv. Current or historical proportion of ACKs; and
   v. Current or historical proportion of NACKs.

11. A method according to claim 8 wherein

$$f = \begin{cases} if\ NACK(k\text{-}1) > 30\% & m_i(k) = m_i(k\text{-}1) + 2 \\ if\ NACK(k\text{-}1) > 10\% & m_i(k) = m_i(k\text{-}1) + 1 \\ if\ NACK(k\text{-}1) + NACK(k\text{-}2) + NACK(k\text{-}3) < 5\% & m_i(k) = m_i(k\text{-}1) - 1 \\ otherwise & m_i(k) = m_i(k\text{-}1), \end{cases}$$

$$m_i(k) \leq M.$$

12. A method according to any one of the preceding claims
    wherein repeat or supplementary sub-blocks are transmitted over the broadcast channel (111) instead of bi-directional links (122, 132, 142) if the proportion of NACKs exceeds a given threshold, and/or the proportion of ACKs does not meet a corresponding threshold.

13. Apparatus for use in a retransmission request mechanism according to a method as claimed in any preceding claim in a broadcast communications system comprising; at least said first broadcast transmitter (110) for broadcasting said message comprising data and redundancy or parity bits on said broadcast channel (111), and bi-directional transmission means for transmitting over said bi-directional link (122) from the first transmitter (110) to the first receiver (120) said sub-block or sub-blocks that repeat and/or supplement those $m_i$ sub-blocks that the first receiver (120) was unable to decode from the broadcast message; and
    means for adjusting said characteristics of the broadcast channel transmission dependant upon the proportion of ACKs and/or NACKs that the broadcast transmitter (110) receives over those bi-directional links (122, 132, 142) to which it is connected.

14. Apparatus for use in a retransmission request mechanism according to a method as claimed any one of claims 1-12 in a broadcast communications system comprising;

    said first receiver (120) for receiving said broadcast messages
    transmission means for sending said positive acknowledgements (ACKs) (230) and/or negative acknowledgements (NACKs) (240) from the first receiver (120) to the first transmitter (110) over said bi-directional link, and
    means responsive to said sub-block or sub-blocks carried over the bi-directional link (122) for correcting errors in the received data.

*FIG. 1*

*100*

*FIG. 2*

*FIG. 3*

**European Patent Office**

## EUROPEAN SEARCH REPORT

Application Number

EP 03 29 1278

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | WO 02 087140 A (ROBINSON WILLIAM NEIL ;MOTOROLA INC (US)) 31 October 2002 (2002-10-31) * page 4, line 15 - page 9, line 9 * * figures 2,3 * | 1-14 | H04L1/18 H04L1/16 |
| X | US 2002/095636 A1 (UEDA EIJI ET AL) 18 July 2002 (2002-07-18) * page 2, paragraph 18 - page 3, paragraph 34 * | 1-14 | |

TECHNICAL FIELDS SEARCHED (Int.Cl.7)

H04L

The present search report has been drawn up for all claims

| Place of search | Date of completion of the search | Examiner |
|---|---|---|
| THE HAGUE | 13 November 2003 | Toumpoulidis, T |

# EP 1 482 671 A1

## ANNEX TO THE EUROPEAN SEARCH REPORT
## ON EUROPEAN PATENT APPLICATION NO.

EP 03 29 1278

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2003

| Patent document cited in search report | | Publication date | Patent family member(s) | | Publication date |
|---|---|---|---|---|---|
| WO 02087140 | A | 31-10-2002 | GB | 2374770 A | 23-10-2002 |
| | | | WO | 02087140 A1 | 31-10-2002 |
| US 2002095636 | A1 | 18-07-2002 | CN | 1394411 T | 29-01-2003 |
| | | | EP | 1235383 A1 | 28-08-2002 |
| | | | WO | 0237763 A1 | 10-05-2002 |
| | | | JP | 2002232478 A | 16-08-2002 |

EPO FORM P0459

For more details about this annex : see Official Journal of the European Patent Office, No. 12/82

11